# EUROPEAN PATENT SPECIFICATION

(11) **EP 2 378 224 B1**
(45) Date of publication and mention of the grant of the patent: **04.01.2017**
(21) Application number: 11162379.9
(22) Date of filing: 14.04.2011
(51) Int. Cl.: F25B 37/00, F25B 43/04

(54) **Absorption refrigerator**
Absorptionskältemaschine
Réfrigérateur d'absorption

(30) Priority: 14.04.2010 JP 2010093213
(43) Date of publication of application: 19.10.2011
(73) Proprietor: Honda Motor Co., Ltd., Tokyo 107-8556 (JP)
(72) Inventor: Kayanuma, Hidetaka, Saitama 351-0193 (JP); Ishikawa, Mitsuru, Saitama 351-0193 (JP); Takeuchi, Yoshiyuki, Saitama 351-0193 (JP)
(74) Representative: Weickmann & Weickmann PartmbB

(56) References cited:
- JP-A- 10 306 959
- JP-A- 11 118 299
- DATABASE WPI Week 200467 Thomson Scientific, London, GB; AN 2004-686559 XP000002657093, -& KR 2004 0047394 A (CHOI H S) 5 June 2004 (2004-06-05)

## Description

The present invention relates to an absorption refrigerator according to the preamble part of claim 1. An absorption refrigerator of the generic kind is known from KR1020040047394 A.

Absorption refrigerators work on the principle that heat is absorbed from outside, the thus absorbed heat is absorbed by a refrigerant in an evaporator to cause the refrigerant to become a vapor, the refrigerant vapor is absorbed in an absorbent solution in an absorber, the refrigerant-concentrated absorbent solution is heated in a generator to separate the refrigerant vapor and the absorbent solution, and the separated refrigerant vapor is condensed by a condenser and gives off heat to the outside, which can be used in, for example, a heat exchanger of a room air-conditioning system.

There are two working fluids in the absorption refrigerators; the refrigerant, and the absorbent that absorbs the refrigerant. A known choice is to use water as the refrigerant, and an aqueous saline solution of lithium bromide as the absorbent. This choice is called "Libr-H₂O system". Another known choice is to use TFE (trifluorochloroethylene) as the refrigerant and DMI derivative (1, 3-dimethyl-2-imidazolidinone) as the absorbent. This choice is called "TFE/DMI system".

The absorption refrigerator using the Libr-H₂O system or the TFE/DMI system encounters a problem that due to the reaction between the refrigerant and the outside air entering into the absorber, the reaction between a structural material of the heat exchanger and the refrigerant, or the decomposition of the refrigerant in the absorber, a non-condensable gas is produced and the thus produced non-condensable gas will increase the internal pressure of the whole system of the absorption refrigerator and eventually deteriorate the performance of the absorption refrigerator.

While the absorption refrigerator is not operating, the non-condensable gas spreads uniformly over the entire absorption refrigerator due to diffusion. In view of this, large-sized absorption refrigerators for industrial use are provided with a tank for holding such non-condensable gas, so that the non-condensable gas can be extracted from the tank by means of a vacuum pump. One example of such large-sized industrial absorption refrigerators is disclosed in Japanese Patent Application Laid-open Publication (JP-A) No. 10-306959. The disclosed absorption refrigerator comprises a gas extraction device, which includes a gas extraction pipe disposed horizontally in an absorber for guiding a refrigerant vapor including non-condensable gas, a solution pipe for guiding an absorbent solution, an ejector as the collecting means, and a gas extraction tank as the non-condensable gas holding means. The ejector collects the non-condensable gas in a concentrated condition through absorption of the refrigerant gas including the non-condensable gas by the absorbent solution and sends the concentrated non-condensable gas into the gas extraction tank. The gas extraction tank has a connector adapted to be connected to a vacuum pump as the evacuation means for extracting the non-condensable gas, and an on-off valve incorporated in the connector. The absorbent solution returns from the gas extraction tank to the absorber.

Due to the presence of the gas extraction tank, the gas extraction device of the disclosed absorption refrigerator is large in size and cannot be incorporated in a small-sized home-use absorption refrigerator. In case of a small-sized home-use absorption refrigerator, the extraction of non-condensable gas from the absorption refrigerator is practically impossible due to the absence of a large-capacity gas extraction tank for holding the non-condensable gas. While the absorption refrigerator provided with no gas extraction tank is in not operating, the non-condensable gas spreads uniformly over the entire absorption refrigerator and this makes it difficult to evaporate the non-condensable gas.

Thus, the extraction of condensable gas should be executed while the absorption refrigerator is in operation. While the absorbent refrigerator is in operation, non-condensable gas produced in the absorption refrigerator is carried by a stream of refrigerant vapor into an absorber and a condenser and stays in the absorber and the condenser. Since the non-condensable gas gathers at an end of the stream of refrigerant vapor, this position is most effective to perform the extraction of non-condensable gas. However, because this position is an interface between the gas and the liquid, if a gas extraction tube is provided at this particular position, the liquid can readily be sucked into the gas extraction tube during the evacuation as the liquid level undergoes a change from moment to moment depending on running conditions of the absorption refrigerator. The sucked liquid will cause a malfunction of the vacuum pump, and a leakage of the refrigerant and/or absorbent solution from the absorption refrigerator.

It is therefore an object of the present invention to provide an absorption refrigerator, which is capable of performing the extraction of non-condensable gas without involving undesired sucking of an absorbent solution.

According to an aspect of the present invention, there is provided an absorption refrigerator according to claim 1, comprising: an evaporator which absorbs heat from the outside and causes a refrigerant to evaporate, thereby generating a refrigerant vapor; an absorber which causes the refrigerant vapor to be absorbed by an absorbent solution; a generator which heats the absorbent solution including the refrigerant vapor absorbed therein to release the refrigerant vapor from the absorbent solution; and a condenser which condenses the thus released refrigerant vapor into the refrigerant and gives off heat to the outside, characterized in that a gas extraction tube is disposed vertically in at least one of the absorber and the condenser for extracting non-condensable gas from the absorption refrigerator, wherein the gas extraction tube includes a pressure balancing section extending above a neighborhood on an upper side of a maximum liquid level of the absorber or the condenser, and a gas extracting section continuous with pressure balancing section and extending below the neighborhood on the upper side of the maximum liquid level of the absorber or the condenser, and wherein the gas extraction tube has a plurality of suction holes formed therein and distributed over the pressure balancing section and the gas extracting section.

Preferably, the plurality of suction holes are arranged such that the pressure balancing section has an opening area larger than an opening area of the gas extracting section.

It is preferable that the gas extracting section have a plurality of suction holes arranged in a vertical direction of the gas extraction tube, and an uppermost suction hole of the plurality of suction holes is disposed above the maximum liquid level of the absorber or the condenser.

Preferably, the gas extraction tube is connected to an extraction port through which the non-condensable gas is discharged to the outside, and the extraction port is provided with a check valve for blocking leakage of the non-condensable gas through the extraction port.

Certain preferred embodiments of the present invention will be described in detail below, with reference to the accompanying drawings, in which:
Fig. 1 is a system diagram of an absorption refrigerator according to a first embodiment of the present invention;
Fig. 2 is a system diagram showing an evaporator, an absorber, a generator and a condenser of the absorption refrigerator;
Fig. 3 is a side view, with parts in cross section, of a gas extraction means or device of the absorption refrigerator;
Fig. 4 is a side view with parts cutaway for clarity of a gas extraction tube of the gas extraction device;
Fig. 4B is a cross-sectional view taken along line 4B-4B of Fig. 4A;
Fig. 5 is a cross-sectional view of a check valve of the gas extraction device;
Fig. 6 is a cross-sectional view of the check valve and an evacuation tool assembled with the check valve;
Fig. 7 is a cross-sectional view of the check valve forcibly placed in an open position by means of the evacuation tool;
Figs. 8A and 8B are views similar to Fig. 4, but showing operation of the gas extraction tube during the evacuation in conjunction with a change in the liquid level of an absorber; and
Fig. 9 is a system diagram showing an evaporator, an absorber, a generator and a condenser of an absorption refrigerator according to a second embodiment of the present invention.

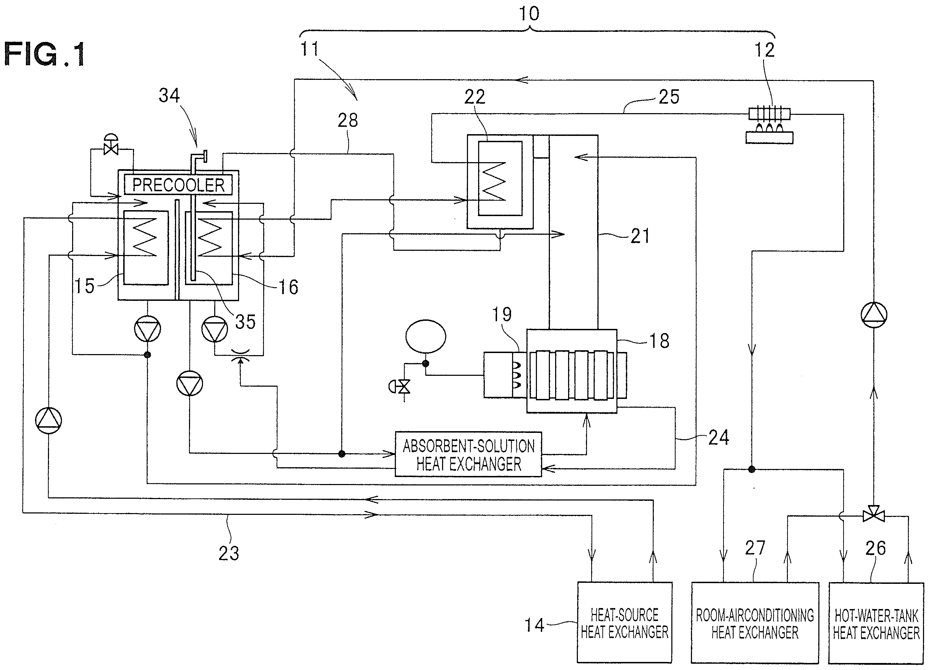

Referring now to Fig. 1, there is shown an absorption refrigerator 10 according to a first embodiment of the present invention. The absorption refrigerator 10 generally comprises an absorption heat pump unit 11 (hereinafter referred to for brevity as "heat pump unit 11") and a boiler 12 associated with the heat pump unit 11 for heating hot water obtained by the heat pump unit 11.

The heat pump unit 11 includes a heat-source heat exchanger 14 for absorbing heat from underground water or outside air (i.e., the outside), an evaporator 15 which absorbs externally absorbed heat and causing a refrigerant to boil or evaporate, thereby generating a refrigerant vapor, an absorber 16 which causes the refrigerant vapor generated by the evaporator 15 to be absorbed by an absorbent solution 17, a generator 18 which heats the absorbent solution 17 including the refrigerant vapor absorbed therein to separate or release the refrigerant vapor 20a from the absorbent solution 17, a rectifier 21 for increasing the purity of the released refrigerant vapor 20a, and a condenser 22 which condenses the high-purity refrigerant vapor 20a and gives off heat to the outside.

The refrigerant used in the evaporator 15 includes fluorinated alcohols, such as TFE (trifluorochloroethylene). The absorbent solution 17 used in the absorber 16 includes a solution of absorbent such as a DMI derivative (1, 3-dimethyl-2-imidazolidinone). Materials for the refrigerant and the absorbent solution should by no means be limited to those specified above but may be substituted by any other materials as selected appropriately.

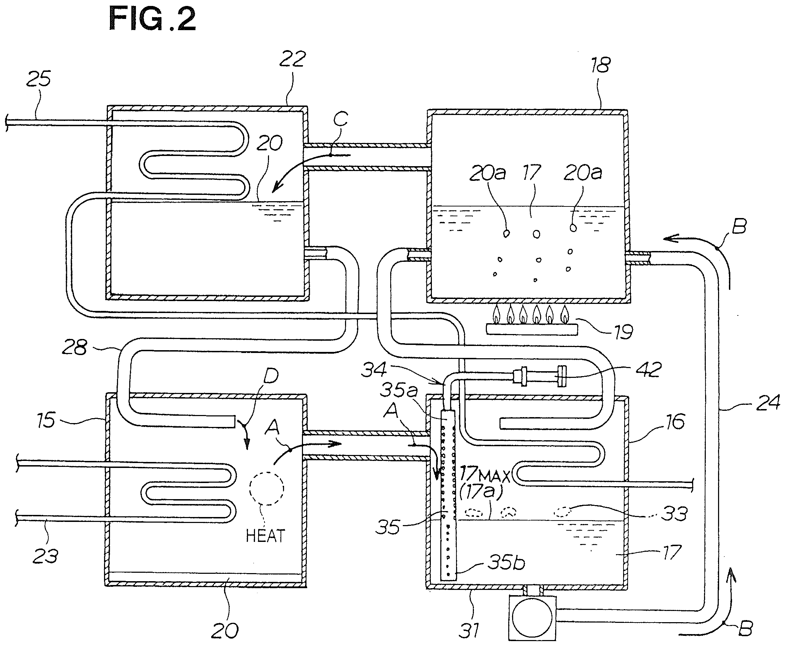

With the heat pump unit 11 of the foregoing construction, water circulating through a cooling water circuit 23 absorbs heat from the heat-source heat exchanger 14 and the thus heated circulating water is guided into the evaporator 15. In the evaporator 15, the refrigerant 20, which is returned from the condenser 22, as indicated by the arrow D shown in Fig. 2, absorbs heat from the circulating water and becomes evaporated, thereby generating a refrigerant vapor. The thus generated refrigerant vapor is delivered from the evaporator 15 to the absorber 16, as indicated by the arrow A shown in Fig. 2.

The refrigerant vapor thus delivered in the absorber 16 is absorbed by the absorbent solution 17. The absorbent solution 17 including the refrigerant vapor absorbed therein is delivered via a piping 24 to the generator 18, as indicated by the arrow B shown in Fig. 2. The absorbent solution 17 delivered to the generator 18 is heated by a heating burner 19 so that a refrigerant vapor 20a is separated or released from the absorbent solution 17. The thus released refrigerant vapor 20a is increased in purity by the rectifier 21 (Fig. 1), and the refrigerant vapor 20a with increased purity is delivered from the rectifier 21 (Fig. 1) to the condenser 22, as indicated by the arrow C shown in Fig. 2.

The condenser 22 condenses the refrigerant vapor 20a into the refrigerant 20 and gives off heat to water circulating through a water piping 25 disposed inside the condenser 22. The heated hot water is delivered through the water piping 25 to the outside of the absorption refrigerator 10. The hot water as it flows downstream along the water piping 25 is further heated by the boiler 12 and thereafter gives off heat to a heat exchanger 26 for a hot water tank and a heat exchanger 27 for a room air-conditioner both shown in Fig. 1. The refrigerant 20 condensed by the condenser 22 is returned via a refrigerant piping 28 to the evaporator 15, as indicated by the arrow D shown in Fig. 2.

The absorber 16 retains the absorbent solution 17 at a bottom part 31 thereof so that the refrigerant vapor generated by the evaporator 15 is absorbed by the absorbent solution 17. As previously described, the absorbent solution 17 retained at the bottom part 31 of the absorber 16 contains a DMI derivative (1, 3-dimethyl-2-imidazolidinone).

The absorption refrigerator 10 using the absorbent solution 17 containing the DMI derivative may encounter a problem that due to the reaction between the refrigerant and the outside air entering into the absorber 16, the reaction between a structural material of the heat exchanger and the refrigerant, or the decomposition of the refrigerant in the absorber 16, a non-condensable 33 gas is produced and the thus produced non-condensable gas 33 will increase the internal pressure of the absorber 16 and eventually deteriorate the performance of the absorption refrigerator 10.

As previously discussed, while the absorption refrigerator 10 is not operating, the non-condensable gas 33 spreads uniformly over the entire absorption refrigerator 10 due to diffusion. On the other hand, while the absorbent refrigerator 10 is in operation, the non-condensable gas 33 is carried by a stream of the refrigerant vapor into the absorber 16 and stays in the proximity of a liquid level 17a of the absorbent solution 17 in the absorber 16. In order to extract the non-condensable gas 33 from the absorber 16, the heat pump unit 11 further includes a gas extraction means or device 34 associated with the absorber 16.

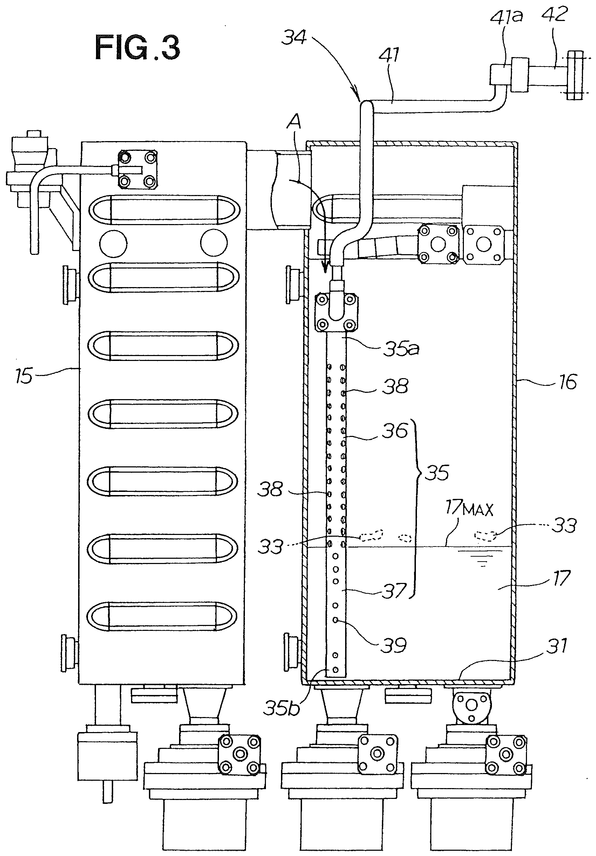

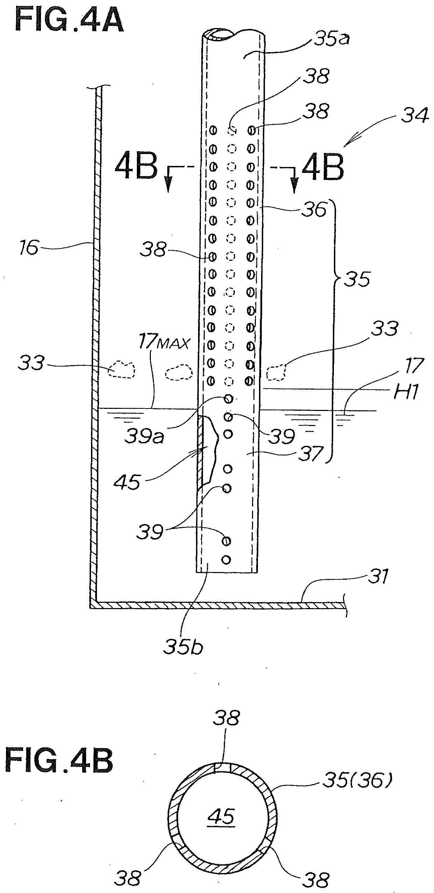

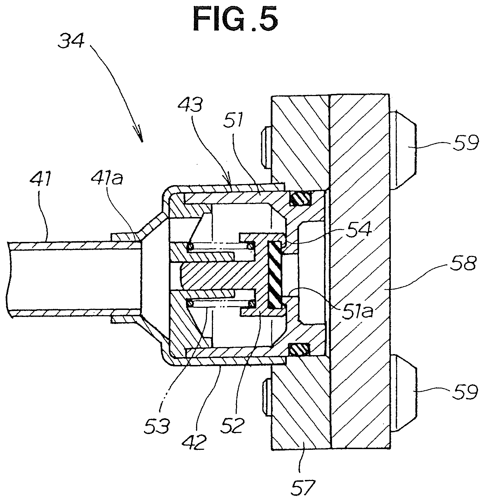

The gas extraction device 34 includes a gas extraction tube 35 provided in the absorber 16 for extracting the non-condensable gas 33 from the absorber 16 while the absorption refrigerator 10 is in operation. More specifically, the gas extraction device 34 is comprised of the gas extraction tube 35 disposed in the absorber 16 as shown in Figs. 3 and 4A, a connecting pipe 41 connected at one end to an upper end portion 35a of the gas extraction tube 35, an extraction port 42 provided at an opposite end 41a (downstream end with respect to a flow direction of the non-condensable gas 33), and a check valve 43 (Fig. 5) disposed in the extraction port 42.

The gas extraction tube 35 is mounted to extend in a vertical direction within the absorber 16 and is open at a lower end portion 35b thereof. The gas extraction tube 35 includes a pressure balancing section 36 extending above a neighborhood H1 (Fig. 4) on an upper side of a maximum liquid level 17_{MAX} of the absorbent solution 17 held in the absorber 16, and a gas extracting section 37 continuous with the pressure balancing section 36 and extending below the neighborhood H1 on the upper side of the maximum liquid level 17_{MAX} of the absorbent solution 17 in the absorber 16. The term "maximum liquid level 17_{MAX}" means a highest liquid level that the absorbent solution 17 in the absorber 16 can reach while the absorption refrigerator 10 is in operation.

The gas extraction tube 35 has a plurality suction holes 38, 39 formed therein and distributed over the pressure balancing section 36 and the gas extracting section 37. The pressure balancing section 36 has a multiplicity of suction holes 38 disposed above the neighborhood H1 on the upper side of the maximum liquid level 17_{MAX} of the absorber 16. On the other hand, the gas extracting section 37 has a plurality of suction holes 39 disposed below the neighborhood H1 on the upper side of the maximum liquid level 17_{MAX} of the absorber 16. The number of the suction holes 38 in the pressure balancing section 36 is larger than the number of suction holes 39 in the gas extracting section 37.

More specifically, the pressure balancing section 36 has three rows of suction holes 38 arranged at regular intervals in a longitudinal direction of the pressure balancing section 36. Each row of suction holes 38 includes a total of fifteen suction holes having a diameter of 1.0 mm. The three rows of suction holes 38 are aligned with one another in a circumferential direction of the pressure balancing section 36 and spaced at equal intervals in the circumferential direction of the pressure balancing section 36, as shown in Fig. 4B.

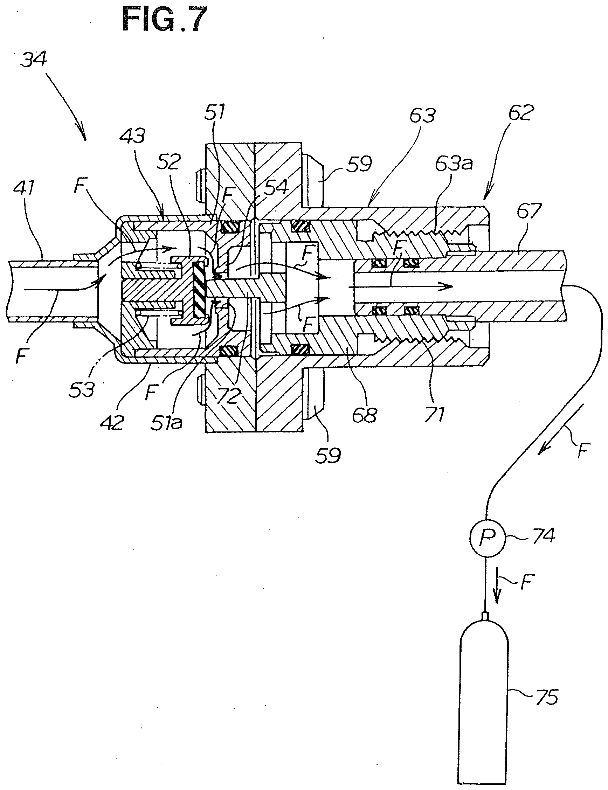

The pressure balancing section 36 thus provided with the multiplicity of suction holes 38 has an opening area S1 (which is represented by a total area of the suction holes 38). The opening area S1 is determined such that the absorbent solution 17 can never be sucked by a partial vacuum or suction created in an internal space 45 of the gas extraction tube 35 during the evacuation performed by using a vacuum pump 74 (Fig. 7). Thus, the suction holes 38 formed in the pressure balancing section 36 serve to maintain balance of the sucking force in such a manner as to prevent the sucking of the absorbent solution 17 caused by the effect of a sucking force created under the action of the vacuum pump 74. The suction holes 38 in the pressure balancing section 36 may be also called "balancing holes".

The gas extracting section 37 has a total of seven suction holes 39 arranged in a raw in a longitudinal direction (vertical direction) of the gas extracting section 37. The suction holes 39 are spaced at non-uniform intervals. More specifically, a set of three suction holes 39 is disposed adjacent to the pressure balancing section 36 and these three suction holes 39 are spaced at regular intervals in the longitudinal direction (vertical direction) of the gas extracting section 37. A first pair of suction holes 39 is disposed below the set of three suction holes 39 with a first predetermined space defined therebetween, and a second pair of suction holes 39 is disposed below the first pair of suction holes 39 with a second predetermined space defined therebetween. The first predetermined space is larger than the second predetermined space.

The uppermost suction hole 39a of the plurality (seven in the illustrated embodiment) of suction holes 39 is formed to located at a position above the maximum liquid level 17_{MAX} of the absorber 16. The suction holes 39 (including the uppermost one 39a) have a diameter of 1.0 mm.

The gas extracting section 37 thus provided with the plurality of suction holes 39 has an opening area S2 (which is represented by a total area of the suction holes 39). The opening area S2 is determined such that a pressure difference created between the gas extraction tube 35 and the absorber 16 during the evacuation performed by using the vacuum pump 74 (Fig. 7) is limited to a predetermined small value. With the opening area S2 thus determined, the sucking force acting on the internal space 45 of the gas extraction tube 35 during the evacuation can only suck the non-condensable gas 33 into the gas extraction tube 35.

It can readily be appreciated that during the evacuation by the vacuum pump 74 (Fig. 7), the risk of sucking the absorbent solution 17 becomes greatest when the liquid level 17a of the absorbent solution 17 in the absorber 16 rises to the maximum liquid level 17_{MAX}. To avoid the risk, the relationship between the opening area S1 of the pressure balancing section 36 and the opening area S2 of the gas extracting section 37 is determined such that when the liquid level 17a of the absorbent solution 17 rises to the maximum liquid level 17_{MAx}, no absorbent solution can be sucked by the effect of a sucking force created while the vacuum pump 74 (Fig. 7) is in operation.

Thus, the relationship between the two opening areas S1 and S2 is determined in view of the intensity of a sucking force created by the vacuum pump 74, so as to preclude the risk of sucking the absorbent solution 17 at the maximum liquid level 17_{MAX}. By thus determining the relationship between the two opening areas S1 and S2, it is possible to provide a pressure balance, which ensures that only the non-condensable gas 33 can be sucked into the gas extraction tube 35 without involving undesired sucking of the absorbent solution 17.

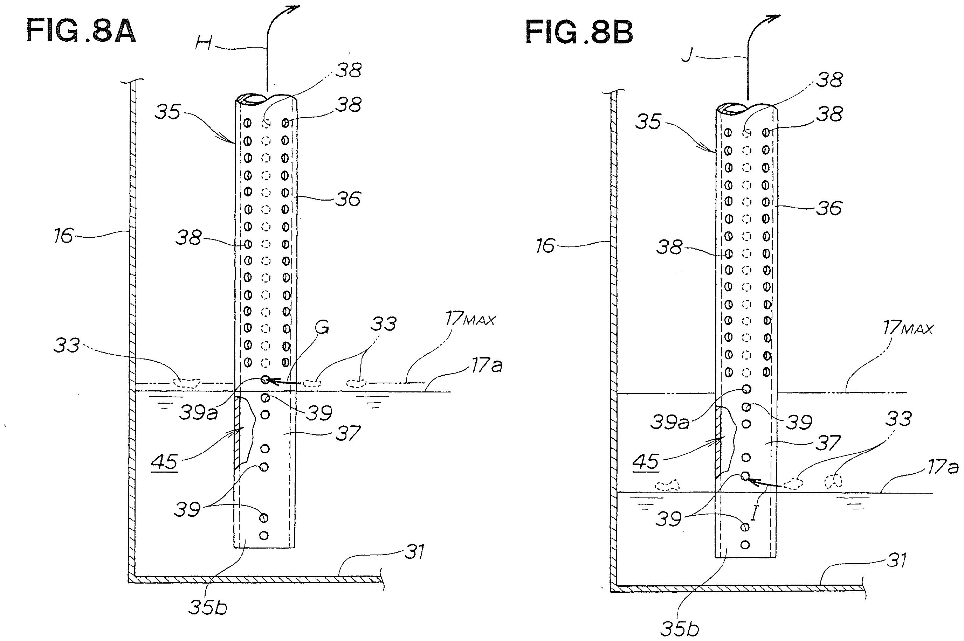

Operation to extract the non-condensable gas 33 through the gas extraction tube 35 to the outside of the absorber 16 will be described below in greater detail with reference to Fig. 8.

As thus far described, the pressure balancing section 36 has a multiplicity of suction holes 38 formed therein, and the internal space 45 of the gas extraction tube 35 communicates with an internal space of the absorber 16 via the suction holes 38 of the pressure balancing section 36. Thus, by properly determining the number and the arrangement of the suction holes 38, it is possible to provide a pressure balance that can limit a pressure difference created between the gas extraction tube 35 and the absorber 16 during the evacuation by the vacuum pump 74 (Fig. 7) to a predetermined small value. With the pressure difference thus created, only the non-condensable gas 33 is sucked into the gas extraction tube 35 without involving undesired socking of the absorbent solution 17 and then discharged to the outside of the absorber 16.

As shown in Fig. 5, the check valve 43 is disposed in the extraction port 42 and includes a valve body 51 having a valve opening 51a, a valve element 52 movably disposed in the valve body 51 and urged by a spring member 53 against a valve seat 54 defined around the valve opening 51a. With this arrangement, the valve opening 51a of the check valve 43 is normally closed by the valve element 52 so that the non-condensable gas 33 is prevented from flowing out through the extraction port 42. By thus providing the check valve 43, it is possible to prevent the leakage of non-condensable gas 33 through the extraction port 42 during normal operating condition of the absorbent refrigerator 10.

The extraction port 42 has an end flange 57 at a discharge end thereof, and a blind flange 58 is connected by bolts 59 to the end flange 57 so as to close or cover a discharge end side of the check valve 43. When the non-condensable gas 33 is to be extracted through the extraction port 42, the blind flange 58 is removed from the end flange 57 and the discharge end side of the check valve 43 is exposed to the outside.

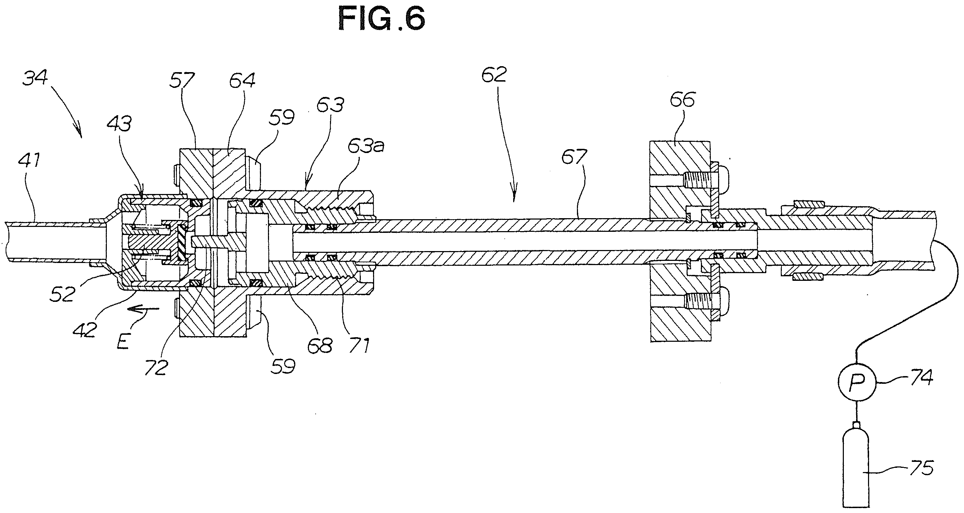

Next, description will be made about an operation to extract the non-condensable gas 33 (Fig. 4) through the extraction port 42 by using an evacuation tool 62 (Figs. 6 and 7) with reference to Figs. 5 to 7.

At first, the blind flange 58 is removed from the end flange 57 of the extraction port 42 by loosening the bolts 59. Then, as shown in Fig. 6, the evacuation tool 62 is attached to the end flange 57 of the extraction port 42. More particularly, an attachment flange 64 formed at the front end of a rod holder 63 is connected by the bolts 59 to the end flange 57 of the extraction port 42. Subsequently, a dial 66 (Fig. 6) mounted on a push rod 67 is rotated by a human operator whereupon the push rod 67 rotates with the dial 66. The push rod 68 has an externally threaded portion 71, and the rod holder 63 has an internally threaded portion 63a, which is threadedly engaged with the externally threaded portion 71 of the push rod 68. With this arrangement, rotating the dial 67 in a direction to advance the push rod 68 will cause the push rod 68 to advance toward the check valve 43 as indicated by the arrow E shown in Fig. 6. The push rod 68 has a pushpin 72 provided at a front end thereof.

Accordingly, as shown in Fig. 7, advancing movement of the push rod 68 toward the check valve 43 will cause the pushpin 72 to engage the valve element 52 of the check valve 43 and subsequently force the valve element 52 in a direction away from the valve seat 54 against the force of the spring member 53. With this displacement of the valve element 52, the valve opening 51a of the valve body 51 is opened. The vacuum pump 74 connected to the evacuation tool 62 is operated whereupon the non-condensable gas 33 (Fig. 4) is extracted from the extraction port 42 and recovered into a gas extraction tank 75 (Figs. 6 and 7) as indicated by the arrows F shown in Fig. 7.

The check valve 43 provided in the extraction port 42 allows for easy and reliable extraction of the non-condensable gas 33 through the extraction port 42 that can be achieved at, for example, regular inspections.

Next, an operation to the absorber 16 for removing the non-condensable gas 33 by operating the vacuum pump 74 will be described below with reference to Figs. 8A and 8B.

While the absorption refrigerator 10 is in operation, the liquid level 17a of the absorbent solution 17 changes from moment to moment. Fig. 8A shows a condition in which the liquid level 17a of the absorbent solution 17 is slightly lower than the maximum liquid level 17_{MAX}, whilst Fig. 8B shows a condition in which the liquid level 17a of the absorbent solution 17 is considerably lower than the maximum liquid level 17_{MAX},

As shown in Fig. 8A, the liquid level 17a of the absorbent solution 17 is slightly lower than the maximum liquid level 17_{MAX} of the absorber 16. Among the suction holes 39 formed in the gas extracting section 37 of the gas extracting tube 35, the uppermost suction hole 39a is disposed above the liquid level 17a of the absorbent solution 17, and the remaining suction holes 39 are disposed below the liquid level 17a and, hence, they are submerged in the absorbent solution 17. In this condition, the vacuum pump 74 (Fig. 7) is operated whereupon a suctioning force P1 (not shown) is created in the internal space 35 of the gas extraction tube 35.

In this instance, if the opening area S1 of the pressure balancing section 36 were not provided, the sucking force P1 (not shown) would act directly on interior of the gas extracting section 37 and suck the absorbent solution 17 received in the gas extracting section 37 of the gas extraction tube 35. As previously discussed, the risk of sucking the absorbent solution 17 becomes greatest when the liquid level 17a of the absorbent solution 17 is equal to the maximum liquid level 17_{MAX}.

According to the present invention, the opening area S1 is provided on the pressure balancing section 36 by forming a multiplicity of suction holes 38 in the pressure balancing section 36 of the gas extraction tube 35. With the opening area S1 thus provided in the pressure balancing section 36, it is possible to limit a sucking force of the vacuum pump 74 to a predetermined small value, which will ensure that a difference in internal pressure between the absorber 16 and the gas extraction tube 35 can be set in an appropriate manner. By virtue of the pressure difference (or pressure balance) thus provided, only the non-condensable gas 33 can be sucked from the uppermost suction hole 39a into the gas extraction tube 35 as indicated by the arrow G shown in Fig. 8A, without involving undesired sucking of the absorbent solution 17. The sucked non-condensable gas 33 will then be discharged to the outside of the absorber 16 as indicated by the arrow H shown in Fig. 8A.

In the condition shown in Fig. 8B the liquid level 17a of the absorbent solution 17 is considerably lower than the maximum liquid level 17_{MAX}, and five out of seven suction holes 39 are disposed above the liquid level 17a. When the vacuum pump 74 (Fig. 7) is operated, a sucking force P2 (not shown) is created in the internal space 45 of the gas extraction tube 35.

In this instance, because of the multiple suction holes 38 formed in the pressure balancing section 36 of the gas extraction tube 35 so as to provide the opening area S1, it is possible to limit the sucking force P2 (not shown) to a predetermined small value. This arrangement will ensure that a difference in internal pressure between the absorber 16 and the gas extraction tube 35 can be set in an appropriate manner. By virtue of the pressure difference (or pressure balance) thus provided, only the non-condensable gas 33 can be sucked through the exposed five suction hole 39 into the gas extraction tube 35 as indicated by the arrow I shown in Fig. 8B, without involving undesired sucking of the absorbent solution 17. The sucked non-condensable gas 33 will then be discharged to the outside of the absorber 16 as indicated by the arrow J shown in Fig. 8B.

The invention has thus been described in conjunction with two particular conditions shown in Figs. 8A and 8B, where in the first condition shown in Fig. 8A, the extraction of the non-condensable gas 33 is performed at a liquid level 17a which is slightly lower than the maximum liquid level 17_{MAX}, while in the second condition shown in Fig. 8B, the extraction of the non-condensable gas 33 is performed at a liquid level 17a which is considerably lower than the maximum liquid level 17_{MAX}. In both conditions, only the non-condensable gas can 33 be extracted without involving undesired socking of the absorbent solution 17. It is to be noted however that the same effect can be attained at any absorbent solution level.

Particularly as shown in Figs. 4A and 4B, the pressure balancing section 36 of the gas extraction tube 35 has a multiplicity of suction holes 38, and all of these suction holes 38 are disposed above a neighborhood H1 on an upper side of the maximum liquid level 17_{MAX} of the absorber 16. Furthermore, the gas extracting section 37 of the gas extraction tube 35 has a plurality of suction holes 39, and all of the suction holes 39 are disposed below the neighborhood H1 on the upper side of the maximum liquid level 17_{MAX} of the absorber 16. The uppermost suction hole 39a of the suction holes 39 is disposed above the maximum liquid level 17_{MAX} of the absorber 16. With this arrangement, even when the liquid level 17a of the absorbent solution 17 is equal to the maximum liquid level 17_{MAX} of the absorber 16, the non-condensable gas 33 can solely and reliably be extracted through the uppermost suction hole 39a into the gas extraction tube 35 in the like manner as indicated by the arrow G shown in 8A, without involving undesirable sucking of the absorbent solution 17.

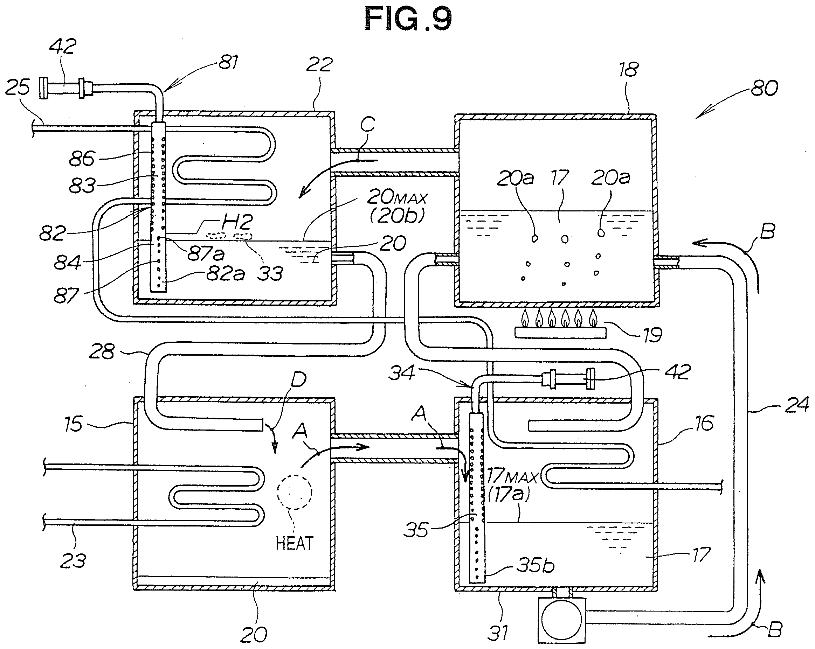

Referring next to Fig. 9, an absorption refrigerator 80 according to a second embodiment of the present invention will be described. As for the absorption refrigerator 80, these parts which are similar or identical to those parts described above in conjunction with the absorbent refrigerator 10 of the first embodiment will be designated by the same reference characters. The absorption refrigerator 80 differs from the absorption refrigerator 10 of the first embodiment in that a second gas extraction means or device 81 associated with the condenser 22 in additional to the gas extraction device 34 associated with the absorber 16. The second gas extraction device 81 includes a gas extraction tube 82 disposed vertically in the condenser 22. The gas extraction tube 82 is structurally and functionally the same as the gas extraction tube 35 of the first embodiment.

While the absorption refrigerator 80 is in operation, non-condensable gas 33 produced in the absorption refrigerator 80 is carried by a stream of refrigerant vapor into the absorber 16 and stays at a neighboring region of the liquid level 17a of the absorbent solution 17 held within the absorber 16. At the same time, it may occur that part of the non-condensable gas 33 is carried into the condenser 22 and stays at a neighboring region of the liquid level 20a of the refrigerant 20 held in the condenser 22.

In order to extract the non-condensable gas 33 from the condenser 22, the gas extraction tube 82 has a multiplicity of suction holes 86 formed in a pressure balancing section 83 of the gas extraction tube 82, and a plurality of suction holes 87 formed in a gas extracting section 84 of the gas extraction tube 82. The suction holes 86 in the pressure balancing section 83 are greater in number than the suction holes 87 in the gas extracting section 84.

The suction holes 86 of the pressure balancing section 83 are disposed above a neighborhood H2 on an upper side of a maximum liquid level 20_{MAX} of the refrigerant 20, while the suction holes 87 of the gas extracting section 84 are disposed below the neighborhood H2 on the upper side of the maximum liquid level 20_{MAX} of the refrigerant 20. Furthermore, the uppermost suction hole 87a of the plurality of suction holes 87 is disposed above the maximum liquid level 20_{MAX} of the refrigerant 20 held in the condenser 22. The term "maximum liquid level 20_{MAX}" means a highest liquid level that the refrigerant 20 in the condenser 22 can reach while the absorption refrigerator 80 is in operation.

According to the absorption refrigerator 80 according to the second embodiment of the present invention, the non-condensable gas 33 staying in the neighboring region of the liquid level 17a of the absorbent solution 17 held within the absorber 16 can be extracted by the gas extraction tube 35 provided in the absorber 16. Furthermore, the non-condensable gas 33 staying in the neighboring region of the liquid level 20a of the refrigerant 20 held in the condenser 22 can be extracted by the gas extraction tube 82 disposed in the condenser 22. Thus, the non-condensable gas 33 produced in the absorption refrigerator 80 can be extracted with improved efficiency.

Various changes and modifications are possible in the light of the teachings of the invention. For instance, the gas extraction device 34 provided in the absorption refrigerator 80 of the second embodiment can be omitted. Furthermore, the gas extraction tubes 35 and 82 used in the illustrated embodiments are open at their lower ends 35b, 82b thereof.

The lower ends 35b, 82b of the gas extraction tubes 35, 82 may be closed. In the latter case, the absorbent solution 17 is introduced into the gas extraction tube 35 via the suction holes 39 formed in the gas extracting section 37 and the introduced absorbent solution 17 rises to the same liquid level as the maximum liquid level 17_{MAX} of the absorber 16. Similarly, the refrigerant 20 is introduced into the gas extraction tube 82 via the suction holes 87 formed in the gas extracting section 84 and the introduced refrigerant 20 rises to the same liquid level as the maximum liquid level 20_{MAX} of the condenser 22.

Furthermore, the number, the shape and the arrangement of the suction holes 38; 86 formed in the pressure balancing sections 36; 83, as well as the number, the shape and the arrangement of the suction holes 39; 87 formed in the gas extracting section 37; 84 should by no means be limited those disclosed in the illustrated first and second embodiments, but may be changed appropriately in accordance with a sucking force (or capacity) of the vacuum pump 74.

Yet, the shape and configuration of the absorption refrigerators 10, 80 including the evaporator 15, absorber 16, generator 18, condenser 22, gas extraction tubes 35, 82, pressure balancing sections 36, 83, gas extracting sections 37, 84, suction holes 38, 39, 86, 87, ext4action port 42, and the check valve 43 can be changed as appropriate in accordance with the need.

## Claims

1. An absorption refrigerator, comprising:
an evaporator (15) which absorbs heat from the outside and causes a refrigerant (20) to evaporate, thereby generating a refrigerant vapor (20a);
an absorber (16) which causes the refrigerant vapor (20a) to be absorbed by an absorbent solution (17);
a generator (18) which heats the absorbent solution (17) including the refrigerant vapor (20a) absorbed therein to release the refrigerant vapor (20a) from the absorbent solution (17);
a condenser (22) which condenses the thus released refrigerant vapor into the refrigerant and gives off heat to the outside; and
a gas extraction tube (35; 82) disposed vertically for extracting non-condensable gas (33) from the absorption refrigerator,
**characterized in that** the gas extraction tube (35; 82) is disposed in at least one of the absorber (16) and the condenser (22),
wherein the gas extraction tube (35; 82) includes a pressure balancing section (36; 83) extending above a neighborhood (H1; H2) on an upper side of a maximum liquid level (17_{MAX}; 20_{MAX}) of the absorber (16) or the condenser (22), and a gas extracting section (37; 84) continuous with pressure balancing section (36; 83) and extending below the neighborhood (H1; H2) on the upper side of the maximum liquid level (17_{MAX}; 20_{MAX}) of the absorber (16) or the condenser (22), and
wherein the gas extraction tube (35; 82) has a plurality of suction holes (38, 39; 86, 87) formed therein and distributed over the pressure balancing section (36; 83) and the gas extracting section (37; 87), said pressure balancing section including a plurality of pressure balancing section suction holes (38; 86), said gas extracting section including a plurality of gas extracting section suction holes (39; 87).

2. The absorption refrigerator of claim 1, wherein the plurality of suction holes (38, 39; 86, 87) are arranged such that the pressure balancing section (36; 83) has an opening area (S1) larger than an opening area (S2) of the gas extracting section (37; 84).

3. The absorption refrigerator of claim 2, wherein the gas extracting section (37; 84) has a plurality of suction holes (39; 87) arranged in a vertical direction of the gas extraction tube (35; 82), and an uppermost suction hole (39a; 87a) of the plurality of suction holes (39; 87) is disposed above the maximum liquid level (17_{MAX}; 20_{MAX}) of the absorber (16) or the condenser (22).

4. The absorption refrigerator of any one of claims 1 to 3, wherein the gas extraction tube (35; 82) is connected to an extraction port (42) through which the non-condensable gas is discharged to the outside, and the extraction port (42) is provided with a check valve (43) for blocking leakage of the non-condensable gas through the extraction port (42).

## Patentansprüche

1. Absorptionskältemaschine, welche aufweist:
einen Verdampfer (15), der Wärme von der Außenseite absorbiert und bewirkt, dass ein Kühlmittel (20) verdampft, um hierdurch einen Kühlmitteldampf (20a) zu erzeugen;
einen Absorber (16), der bewirkt, dass der Kühlmitteldampf (20a) von einer Absorberlösung (17) absorbiert wird;
einen Generator (18), der die Absorberlösung (17) einschließlich des darin absorbierten Kühlmitteldampfs erhitzt, um den Kühlmitteldampf (20a) aus der Absorberlösung (17) freizusetzen;
einen Kondensator (22), der den so freigesetzten Kühlmitteldampf zu Kühlmittel kondensiert und Wärme zur Außenseite abgibt; und
ein Gasextraktionsrohr (35; 82), das vertikal angeordnet ist, um nichtkondensierbares Gas (33) von der Absorptionskältemaschine zu extrahieren,
**dadurch gekennzeichnet, dass** das Gasextraktionsrohr (35; 82) in zumindest einem des Absorbers (16) und des Kondensators (22) angeordnet ist,
wobei das Gasextraktionsrohr (35; 82) einen Druckausgleichsabschnitt (36; 83) enthält, der sich über eine Nachbarschaft (H1; H2) an einer Oberseite eines maximalen Flüssigkeitspegels (17ₘₐₓ; 20ₘₐₓ) des Absorbers (16) oder des Kondensators (22) erstreckt, sowie einen Gasextraktionsabschnitt (37; 87), der sich an den Druckausgleichsabschnitt (36; 83) anschließt und sich unter die Nachbarschaft (H1; H2) an der Oberseite des maximalen Flüssigkeitspegels (17ₘₐₓ; 20ₘₐₓ) des Absorbers (16) oder des Kondensators (22) erstreckt, und
wobei in dem Gasextraktionsrohr (35; 82) eine Mehrzahl von Sauglöchern (38, 39; 86, 87) ausgebildet und über den Druckausgleichsabschnitt (36; 83) und den Gasextraktionsabschnitt (37; 87) verteilt sind, wobei der Druckausgleichsabschnitt eine Mehrzahl von Druckausgleichsabschnitt-Sauglöchern (38; 86) enthält, wobei der Gasextraktionsabschnitt eine Mehrzahl von Gasextraktions-Sauglöchern (39; 87) enthält.

2. Die Absorptionskältemaschine von Anspruch 1, wobei die Mehrzahl von Sauglöchern (38, 39; 86, 87) derart angeordnet sind, dass der Druckausgleichsabschnitt (36; 83) eine Öffnungsfläche (S1) aufweist, die größer ist als eine Öffnungsfläche (S2) des Gasextraktionsabschnitts (37; 84).

3. Die Absorptionskältemaschine von Anspruch 2, wobei der Gasextraktionsabschnitt (37; 84) eine Mehrzahl von Sauglöchern (39; 37) aufweist, die in vertikaler Richtung des Gasextraktionsrohrs (35; 82) angeordnet sind, und ein oberstes Saugloch (39a; 87a) der Mehrzahl von Sauglöchern (39; 87) über dem maximalen Flüssigkeitspegel (17ₘₐₓ; 20ₘₐₓ) des Absorbers (16) oder des Kondensators (22) angeordnet ist.

4. Die Absorptionskältemaschine von einem der Ansprüche 1 bis 3, wobei das Gasextraktionsrohr (35; 82) mit einer Extraktionsöffnung (42) verbunden ist, durch die das nicht-kondensierbare Gas zur Außenseite abgegeben wird, und die Extraktionsöffnung (42) mit einem Rückschlagventil (43) versehen ist, um eine Leckage des nichtkondensierbaren Gases durch die Extraktionsöffnung (42) zu blockieren.

## Revendications

1. Réfrigérateur à absorption, comprenant :
un évaporateur (15) qui absorbe de la chaleur provenant de l'extérieur et provoque l'évaporation d'un fluide frigorigène (20), générant ainsi une vapeur de fluide frigorigène (20a) ;
un absorbeur (16) qui provoque l'absorption de la vapeur de fluide frigorigène (20a) par une solution absorbante (17) ;
un générateur (18) qui chauffe la solution absorbante (17) comportant la vapeur de fluide frigorigène (20a) absorbée dans celle-ci pour dégager la vapeur de fluide frigorigène (20a) de la solution absorbante (17) ;
un condenseur (22) qui condense la vapeur de fluide frigorigène ainsi dégagée dans le fluide frigorigène et émet de la chaleur à l'extérieur ; et
un tube d'extraction de gaz (35 ; 82) disposé verticalement pour extraire un gaz non condensable (33) du réfrigérateur à absorption,
**caractérisé en ce que** le tube d'extraction de gaz (35 ; 82) est disposé dans au moins l'un de l'absorbeur (16) et du condenseur (22),
dans lequel le tube d'extraction de gaz (35 ; 82) comporte une section d'équilibrage de pression (36 ; 83) s'étendant au-dessus d'un voisinage (H1 ; H2) sur un côté supérieur d'un niveau de liquide maximal (17_{MAX} ; 20_{MAX}) de l'absorbeur (16) ou du condenseur (22), et une section d'extraction de gaz (37 ; 84) continue avec la section d'équilibrage de pression (36 ; 83) et s'étendant en dessous du voisinage (H1 ; H2) sur le côté supérieur du niveau de liquide maximal (17_{MAX} ; 20_{MAX}) de l'absorbeur (16) ou du condenseur (22), et
dans lequel le tube d'extraction de gaz (35 ; 82) a une pluralité d'orifices d'aspiration (38, 39 ; 86, 87) formés dans celui-ci et répartis sur la section d'équilibrage de pression (36 ; 83) et la section d'extraction de gaz (37; 87), ladite section d'équilibrage de pression comportant une pluralité d'orifices d'aspiration de section d'équilibrage de pression (38 ; 86), ladite section d'extraction de gaz comportant une pluralité d'orifices d'aspiration de section d'extraction de gaz (39 ; 87).

2. Réfrigérateur à absorption selon la revendication 1, dans lequel la pluralité d'orifices d'aspiration (38, 39 ; 86, 87) sont agencés pour que la section d'équilibrage de pression (36 ; 83) ait une surface d'ouverture (S1) plus grande qu'une surface d'ouverture (S2) de la section d'extraction de gaz (37 ; 84).

3. Réfrigérateur à absorption selon la revendication 2, dans lequel la section d'extraction de gaz (37 ; 84) a une pluralité d'orifices d'aspiration (39; 87) agencés dans une direction verticale du tube d'extraction de gaz (35 ; 82), et un orifice d'aspiration le plus haut (39a; 87a) de la pluralité d'orifices d'aspiration (39 ; 87) est disposé au-dessus du niveau de liquide maximal (17_{MAX} ; 20_{MAX}) de l'absorbeur (16) ou du condenseur (22).

4. Réfrigérateur à absorption selon l'une quelconque des revendications 1 à 3, dans lequel le tube d'extraction de gaz (35 ; 82) est relié à un port d'extraction (42) à travers laquelle le gaz non condensable est évacué vers l'extérieur, et le port d'extraction (42) est pourvu d'un clapet antiretour (43) pour bloquer une fuite du gaz non condensable à travers le port d'extraction (42).
